# EUROPEAN PATENT SPECIFICATION

(11) **EP 4 472 148 B1**
(45) Date of publication and mention of the grant of the patent: **15.07.2026**
(21) Application number: 24179241.5
(22) Date of filing: 31.05.2024
(51) Int. Cl.: H04L 12/40

(54) **METHOD AND DEVICE FOR ENCODING BATTERY MANAGEMENT SYSTEM**
VERFAHREN UND VORRICHTUNG ZUR CODIERUNG EINES BATTERIEVERWALTUNGSSYSTEMS
PROCÉDÉ ET DISPOSITIF DE CODAGE DE SYSTÈME DE GESTION DE BATTERIE

(30) Priority: 31.05.2023 CN 202321375952 U; 31.05.2023 CN 202310641208; 17.05.2024 WO PCT/CN2024/093938
(43) Date of publication of application: 04.12.2024
(73) Proprietor: Eve Energy Co., Ltd., Huizhou, Guangdong 516006 (CN)
(72) Inventor: YIN, Zhiguo, Huizhou, Guangdong, 516006 (CN); PENG, Geng, Huizhou, Guangdong, 516006 (CN); GUO, An, Huizhou, Guangdong, 516006 (CN); LIU, Zhen, Huizhou, Guangdong, 516006 (CN); ZHAO, Wenjing, Huizhou, Guangdong, 516006 (CN)
(74) Representative: Murgitroyd & Company

(56) References cited:
- US-A1- 2017 106 764
- US-A1- 2021 376 635
- US-A1- 2022 046 114

## Description

### TECHNICAL FIELD

The present disclosure relates to the field of battery technologies, and more particular to a method for encoding a battery management system and a device for encoding a battery management system.

### BACKGROUND

In a distributed two-stage architecture of a Battery management system (BMS) or a distributed three-stage architecture of the BMS, a master control board of the BMS is communicated with one or more slave control boards of the BMS via a serial bus interface such as a Controller Area Network (CAN) bus interface and a 485 bus interface, and the slave control boards of the BMS connected to the same bus is required to be distinguishable by the master control board of the BMS. Therefore, it is necessary to set different Identity Documents (IDs) for the slave control boards so as to encode the slave control boards of the BMS.

In the related art, there are mainly three ways to encode the slave control boards of the BMS: a first way is to write an ID into each of the slave control boards of the BMS by a compiler or an upper computer to complete encoding of the slave control boards; a second way is to input an ID on each of the slave control boards of the BMS by setting a dial on the slave control board in factory or on-site assembling of the BMS to complete encoding of the slave control boards; and a third way is to count and set the number of slave control boards by the upper computer or the master control board of the BMS in on-site assembling of the BMS, so as to perform encoding of the slave control boards in a manner of the CAN communication and the hard wire digital signal transmission. D1(US2021376635A1) discloses apparatuses, systems, and methods for battery charging and power output. A system may include a plurality of hot-swappable, stackable slices for battery charging and power output. A slice may include communication circuitry for communication among the slices. A slice may include power input conversion circuitry, power storage circuitry, and/or power output conversion circuitry. A slice may include at least one electrical connector for connecting to a second slice. The at least one electrical connector may include connections for power and communications. A slice may include at least one mechanical connector for connecting to the second slice.

### SUMMARY

The invention is set out in the appended set of claims.

### Beneficial Effects

Beneficial Effects of the present disclosure are that:
in some embodiments of the present disclosure, the battery management system includes a master control board and a plurality of slave control boards, the master control board is connected with each of the slave control boards by a CAN bus, the plurality of slave control boards are arranged in sequence, and the master control board is connected to a first slave control board and a last slave control board of the plurality of slave control boards via an Input Output (IO) line, and a previous slave control board and a next slave control board of the slave control boards are connected via the IO line, so as to realize a closed-loop connection between the master control board and the slave control boards without counting the number of slave control boards in advance. Additionally, repetition of encoding of the slave control boards that have been addressed is avoided by performing addressing detection for each of the slave control boards. Further, the digital signal output from the IO line and the encoding message of the CAN bus are analyzed and processed, so that automatic encoding of all slave control boards in the battery management system is realized, the number of slave control boards does not need to be counted, missing encoding and re-coding are avoided, and the encoding efficiency of the battery management system is improved.

### DESCRIPTION OF THE DRAWINGS

FIG. 1 is a schematic flowchart of a method for encoding a battery management system according to some embodiments of the present disclosure.
FIG. 2 is an architectural diagram of a battery management system according to some embodiments of the present disclosure.
FIG. 3 is a schematic structural diagram of an electronic device according to some embodiments of the present disclosure.
FIG. 4 is an architectural diagram of a battery management system according to some embodiments of the present disclosure.
FIG. 5 is a schematic diagram of a connection relationship of a battery management system according to some embodiments of the present disclosure.

### DETAILED DESCRIPTION

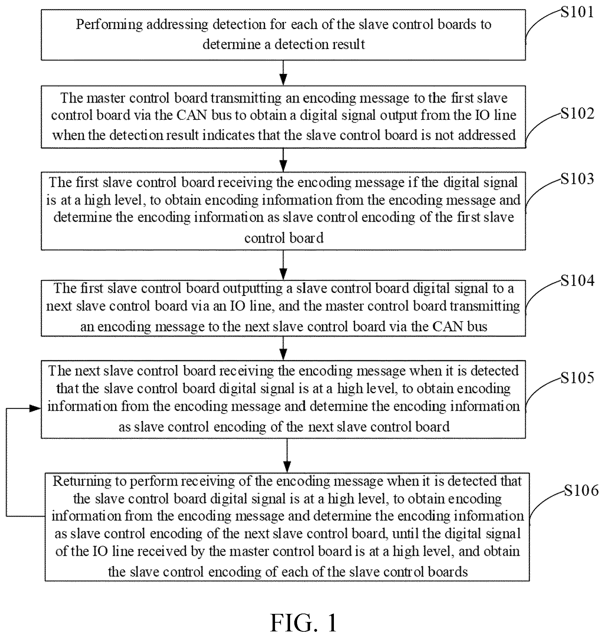

As shown in FIG. 1, which is a schematic flowchart of a method for encoding a battery management system according to some embodiments of the present disclosure. The battery management system may include a master control board and a plurality of slave control boards, where the master control board is connected with each of the slave control boards by a CAN bus, the plurality of slave control boards are arranged in sequence, and the master control board is connected to a first slave control board and a last slave control board of the plurality of slave control boards via an Input Output (IO) line, a previous slave control board and a next slave control board of the slave control boards are connected via the IO line, and a plurality of pieces of pre-configured encoding information are stored in the battery management system. The method for encoding the battery management system may include following steps S101-S106.

At step S101, addressing detection may be performed for each of the slave control boards to determine a detection result.

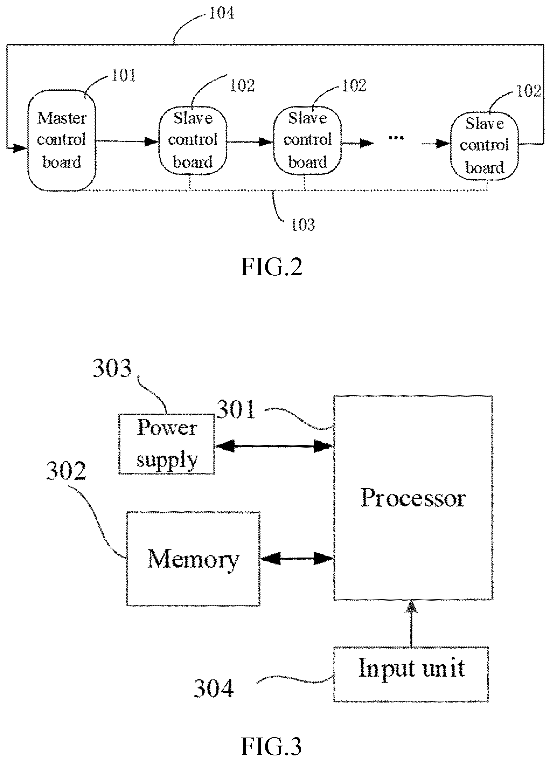

The battery management system in the present embodiments includes a master control board 101 and a plurality of slave control boards 102, where the master control board is connected with each of the slave control boards through the CAN bus 103 to realize communication connection between the master control board 101 and each of the slave control boards 102, such as transmission and reception of a message. The master control board 101 is connected with the first slave control board 102 and the last slave control board 102 via an IO line 104 for transmission of a digital signal between the master control board 101 and the first slave control board 102 and between the last slave control board 102 and the master control board 101. The previous slave control board 102 and the next slave control board 102 of the plurality of slave control boards 102 are connected by the IO line 104 for transmission of a digital signal between two adjacent slave control boards 102. As shown in FIG. 2, which is architectural diagram of a battery management system. In the present embodiments, a communication connection between the master control board 101 and each of the slave control boards 102 is realized, and a closed-loop connection between the master control board 101 and each of the slave control boards 102 is realized, so that the efficiency of encoding the slave control boards is improved without counting the number of slave control boards 102 in advance.

A plurality of pieces of pre-configured encoding information may be stored in the battery management system, where the encoding information is pre-configured information for encoding the slave control boards. For example, the encoding information may be an identification, such as, a character, a number, or a combination of the character and the number. Illustratively, the pre-configured encoding information may be a board number, such as 1, 2, 3, ... 1000, or the like, and may be pre-configured and stored in a storage module of the battery management system.

The addressing detection is a processing method for determining whether a current slave control board has been encoded, so as to avoid reducing of encoding efficiency by repetition encoding of the slave control boards.

Specifically, efficient addressing detection of the slave control board can be realized by comparing a message transmitted or received by the battery management system with parameter information in an Electrically Erasable Programmable Read-Only Memory (EEPROM) of the slave control board and determining a detection result according to the comparison result.

The performing of addressing detection for each of the slave control boards to obtain the detection result may include: configuring a slave control message corresponding to each of the slave control boards according to an internal parameter of the slave control board; obtaining a first check value by performing Cyclic Redundancy Check (CRC) check for the slave control message; obtaining a second check value by obtaining a master control message received by the master control board to perform CRC check for the master control message; and comparing the first check value with the second check value to determine a detection result.

The CRC check refers to an algorithm for performing calculation of checksum on a frame of message. In the present embodiments, a CRC8 check algorithm is selected. The CRC8 is that a finally generated CRC check code is one byte, and generates a polynomial g(x)=x^8+x^5+x^4+1, which corresponds to g(x)=1·x^8+0·x^7+0·x^6+1·x^5+1·x^4+0·x^3+0·x^2+0·x^1+1·x^0, i.e., a binary number corresponding to the polynomial is 100110001.

The first check value refers to a check value for the slave control board performing cyclic redundancy check for the slave control message configured according to the internal parameter of the slave control board. The second check value refers to a check value for the master control board performing cyclic redundancy check for the master control message received by the master control board. It should be noted that the first check value and the second check value use the same cyclic redundancy check algorithm, for example, the CRC8 check algorithm.

Specifically, the slave control board reads the internal parameter of the slave control board after receiving a message for the addressing detection, and configures a slave control message according to the internal parameter. For example, the slave control board may use the internal parameter as the slave control message, and performs CRC check for the slave control message to obtain a first check value. At the same time, the master control board performs CRC check for a master control message received by the mater control board to obtain a second check value. By comparing the first check value with the second check value, i.e., comparing the first check value calculated by the slave control board itself with the second check value calculated by the master control board for the slave control board, addressing detection may be performed for the slave control board according to a comparison result between the first check value and the second check value. It can be understood in the present embodiments that, by comparing the CRC check value calculated by the slave control board itself with the CRC check value calculated by the master control board for the slave control board, the high efficiency of the CRC check calculation is utilized, and the addressing detection efficiency is improved.

In one specific embodiment, after the battery management system is powered on and initialized, digital interfaces of the master control board and the slave control boards are initialized to be low levels (LOW). Then, each of the slave control boards enters a silent state, and the master control board transmits a frame of message (e.g., FlowControlReq=0xAA in 0x0801FF00) for check to the slave control board according to a preset period (e.g., 50ms). Then, the slave control board reads an internal parameter from itself and performs CRC8 calculation. A polynomial generated according to a CRC8 standard is x^8+x^5+x^4+1. After each of the slave control boards calculates respective CRC, a frame of CRC calculation result, that is, a first check value (e.g., CfgResp_Type=1 and CfgResp_Crc=CRC8 in 0x1827FExx) is returned to the master slave control board in a period of 50ms, and the master slave control board sequentially compares the first check value returned from each of the slave control boards with the second check value obtained by performing CRC8 calculation for the received master control message, and determines whether the slave control board is addressed.

The comparing of the first check value with the second check value to determine the detection result may include: if the first check value is consistent with the second check value, the detection result indicates that the slave control board has been addressed; and if the first check value is inconsistent with the second check value, the detection result indicates that the slave control board is not addressed.

Specifically, when the first check value is consistent with the second check value, it is indicated that the CRC check value calculated by the slave control board is the same as the CRC check value calculated by the master control board for the slave control board. Therefore, it is determined that the slave control board has been addressed, and encoding of the slave control board is not required. In this case, the master control board transmits an operation broadcast frame (for example, FlowControlReq=0x55 in 0x0801FF00, and stops transmitting the frame after continuously transmitting the frame for 2 seconds) on a periodic basis, and the battery management system enters a normal operation. When the first check value is inconsistent with the second check value, it is indicated that a first check value among the first check values calculated by the slave control boards is different from the CRC check value calculated by the master control board for the slave control boards, that is, at least one slave control board is not encoded. Therefore, it is determined that the slave control board is not addressed. As such, an addressing operation needs to be performed for the slave control boards to implement encoding processing of the slave control boards.

The method may further include: before the configuring the slave control message corresponding to each of the slave control boards according to the internal parameter of the slave control board, transmitting a check message to the slave control board in a broadcast manner according to a preset period.

The check message is an instruction for checking related information of the slave control board, such as a board number and an internal parameter.

Specifically, the battery management system periodically transmits a check message to the slave control boards at a preset period, and the check message is in a broadcast form, so that each of the slave control boards receives the check message to avoid missed reception of the check message, thereby ensuring the check of the related information of the slave control board, and further improving the addressing detection efficiency of the slave control board.

The method may further include: before the configuring the slave control message corresponding to each of the slave control boards according to the internal parameter of the slave control board, writing a configuration parameter into each of the slave control boards; and determining encoding information corresponding to the slave control board according to the configuration parameter.

The configuration parameter is a parameter written into each of the slave control boards, and may be a board number, such as 1, 2, 3...; a number of channels; or a combination of the board number and the number of channels, which is not limited herein.

Specifically, the battery management system writes the configuration parameter into the slave control board, and then processes the configuration parameter. The configuration parameter may be used as the encoding information, or the configuration parameter may be converted in a certain manner (for example, a constant value is added to the configuration parameter of each of the slave control boards) and used as the encoding information. It can be understood in the present embodiment that the encoding information is determined according to the configuration parameters by writing the configuration parameters into each of the slave control boards. Since the configuration information of each of the slave control boards is different, the written configuration parameter is different, which ensures the uniqueness of the encoding information by determining the encoding information based on the configuration parameters.

At step S102, the master control board may transmit an encoding message to the first slave control board via the CAN bus to obtain a digital signal output from the IO line when the detection result indicates that the slave control board is not addressed.

The encoding message refers to an instruction for encoding the slave control board.

Specifically, when the slave control board is not addressed, encoding processing needs to be performed for the slave control board. Therefore, the master control board may transmit the encoding message to the first slave control board via the CAN bus to obtain a digital signal output from the IO line.

The method may further include: after the master control board transmitting an encoding message to the first slave control board via the CAN bus to obtain a digital signal output from the IO line when the detection result indicates that the slave control board is not addressed, stopping transmitting the check message, and setting the digital signal of the IO line of the master control board to a high level.

Specifically, when it is determined that the slave control board is not addressed, the slave control board needs to be encoded. Therefore, transmission of the check message is stopped without checking the related information of the slave control board while the digital signal of the IO line of the master control board is set to a high level, so that an encoding instruction may be triggered for the slave control board, thereby improving encoding efficiency.

At step S103, the first slave control board may receive the encoding message if the digital signal is at a high level, to obtain encoding information from the encoding message and determine the encoding information as slave control encoding of the first slave control board.

The slave control encoding refers to encoding of the slave control board, and is used as an identification for distinguishing the slave control board.

Specifically, when the digital signal output by the IO line is at a high level, the master control board may transmit the high level (where the digital signal is represented with 1) to the first slave control board via the IO line and transmit the encoding message via the CAN bus, and the first slave control board may receive the encoding message when the high level 1 output by the IO line and received by the first slave control board is valid and obtain encoding information from the battery management system, to use the encoding information as the slave control encoding of the first slave control board. Therefore, the encoding of the first slave control board is realized.

In one specific embodiment, the IO line outputs a high level to a first slave control board connected to the IO line, and transmits an encoding message to the first slave control board. When the first slave control board connected to the IO line of the master control board detects that the IO line is at a high level, the first slave control board is in a state to be configured and receives the encoding message transmitted by the master control board to obtain and store encoding information into an internal EEPROM of the first slave control board. Then, the first slave control board returns a configuration completion flag (such as, CfgResp_Type=2) to the master control board, while the IO but connected to the first slave control board outputs a high level to the next slave control board, and configuration of the first slave control board code is completed.

At step S104, the first slave control board may output a slave control board digital signal to the next slave control board via the IO line, and the master control board may transmit an encoding message to the next slave control board via the CAN bus.

Specifically, after the encoding of the first slave control board is completed, the first slave control board outputs a digital signal to the next slave control board (for example, the second slave control board) via the IO line, and the master control board transmits an encoding message via the CAN bus to implement encoding processing of the second slave control board.

In one specific embodiment, the master control board transmits an encoding message of the next slave control board after receiving the configuration completion flag of the first slave control board.

At step S105, the next slave control board may receive the encoding message when it is detected that the slave control board digital signal is at a high level, to obtain encoding information from the encoding message and determine the encoding information as slave control encoding of the next slave control board.

Specifically, when the digital signal received by the slave control board is valid at the high level 1, the next slave control board receives an encoding message and obtains one piece of encoding information from the battery management system to use the encoding information as slave control encoding for the next slave control board, thereby completing the encoding of the next slave control board.

In one specific embodiment, the next slave control board enters a configuration flow, receives and stores encoding information in the internal EEPROM of the next slave control board, and returns a configuration completion flag (CfgResp_Type=2) to the master control board. At the same time, the IO line connected to the next slave control board outputs a high level to a next slave control board, and encoding configuration of the next slave control board is completed.

At step S106, performing receiving of the encoding message when it is detected that the slave control board digital signal is at a high level may be returned, to obtain encoding information from the encoding message and determine the encoding information as slave control encoding of the next slave control board, until the digital signal of the IO line received by the master control board is at a high level, and obtain the slave control encoding of each of the slave control boards.

Specifically, after encoding of the current slave control board is completed, a next slave control board adjacent to the current slave control board continues to be encoded. Encoding of each of slave control boards can be realized by repeating step S105, until the digital signal of the IO line received by the master control board is at a high level. That is, the last slave control board outputs the high level 1 to the master control board via the IO line and the digital signal received by the master control board is valid at the high level 1. It indicates that the encoding of the last slave control board is completed, that is, the encoding processing of all slave control boards is realized. It can be understood in the embodiments that the digital signal output from the IO line and the encoding message of the CAN bus are analyzed and processed, so that automatic encoding of all slave control boards in the battery management system is realized, the number of slave control boards does not need to be counted, missing encoding and re-coding are avoided, and the encoding efficiency of the battery management system is improved.

In a specific embodiment, configuration of the next slave control board is encoded in the encoding manner of step S105. When the last slave control board receives the encoding message, the last slave control board obtains and determines the encoding information as slave control encoding of the last slave control board, and returns a configuration completion flag (e.g., CfgResp_Type=2) to the master control board while outputting the digital signal to the master control board at a high level, and encoding of the last slave control board is completed.

The method may further include: after obtaining the slave control encoding of each of the slave control boards, setting a digital signal of the IO line of the slave control board to a low level, and transmitting a normal communication message in a broadcast form.

Specifically, after encoding of all of slave control boards is completed, the digital signal of the IO line of the slave control boards is set to a low level, and a normal communication message is transmitted in a broadcast form. All of slave control boards receive broadcast frames of the normal communication message of the master control board and are transferred from a silent state to an operation state, and transmit the normal communication message, so that the battery management system operates normally.

If no encoding message is received from the slave control board within a preset time, it reminds that the slave control board is faulty.

Specifically, if no coding message is received from the slave control board within a preset time, such as 2s, it reminds that the current slave control board is faulty, and encoding processing may be continued after the current slave control board is detected or replaced, thereby further improving encoding efficiency of the battery management system.

In the present embodiments, the digital signal output from the IO line and the encoding message of the CAN bus are analyzed and processed, so that automatic encoding of all slave control boards in the battery management system is realized, the number of slave control boards does not need to be counted, missing encoding and re-coding are avoided, and the encoding efficiency of the battery management system is improved.

Some embodiments of the present disclosure further provide an electronic device that integrates a device for encoding a battery management system provided in any of embodiments of the present disclosure, including:
one or more processors;
a memory; and
one or more application programs, where the one or more application programs are stored in the memory and configured to be executed by the processors to implement any of the methods as described in the above embodiments.

Embodiments of the present disclosure further provide an electronic device that integrates a device for encoding a battery management system provided in any of embodiments of the present disclosure. As shown in FIG. 3, which shows a schematic structural diagram of the electronic device according to some embodiments of the present disclosure.

The electronic device may include components such as a processor 301 of one or more processing cores, a memory 302 of one or more computer-readable storage media, a power supply 303, and an input unit 304. It should be understood by those skilled in the art that the structure of the electronic device shown in FIG. 3 should be not constituted to be a limitation on the electronic device, and may include more or less components than illustrated, or may combine certain components, or different component arrangements.

The processor 301 is a control center of the electronic device. The processor 601 is connected to various parts of the entire electronic device by various interfaces and lines, and performs various functions of the electronic device and processes data by running or executing software programs and/or modules stored in the memory 302 and invoking data stored in the memory 302, thereby monitoring the electronic device as a whole. Alternatively, the processor 301 may include one or more processing cores. Preferably, the processor 301 may integrate an application processor and a modem processor, where the application processor mainly processes an operating system, a user interface, an application program, and the like, and the modem processor mainly processes wireless communication. It should be understood that the modulation/demodulation processor can be independent from the processor 301.

The memory 302 may be used to store software programs and modules, and the processor 301 executes various functional applications and data processing by running the software programs and modules stored in the memory 302. The memory 302 may mainly include a storage program area and a storage data area, where the storage program area may store an operating system, an application program (such as a sound play function, an image play function, and the like) required by at least one function, and the like; and the storage data area may store data or the like created according to the use of the electronic device. In addition, memory 302 may include a high speed random access memory, and may also include a nonvolatile memory, such as at least one magnetic disk storage device, a flash memory device, or other volatile solid state storage device. Accordingly, memory 302 may also include a memory controller to provide access to the memory 302 by the processor 301.

The electronic device further includes a power supply 303 for supplying power to the respective components. Preferably, the power supply 303 may be logically connected to the processor 301 by the power supply management system, so that functions such as charging, discharging, and power consumption management are managed by the power supply management system. The power supply 303 may further include one or more direct current (DC)/or alternating current (AC) power sources, recharging system, power failure detection circuit, power converter or inverter, power supply status indicator, and the like.

The electronic device may also include an input unit 304 operable to receive input numeric or character information and to generate a signal input of a keyboard, a mouse, a joystick, an optical or a trackball related to user settings and functional control.

Although not shown, the electronic device may also include a display unit or the like, of which details are not repeatedly described herein. In the present embodiment, the processor 301 in the electronic device may load executable files corresponding to processes of one or more application programs into the memory 302 according to the following instructions, and the processor 301 executes the application programs stored in the memory 302 to implement various functions including:
performing addressing detection for each of the slave control boards to determine a detection result;
the master control board transmitting an encoding message to the first slave control board via the CAN bus to obtain a digital signal output from the IO line when the detection result indicates that the slave control board is not addressed;
the first slave control board receiving the encoding message if the digital signal is at a high level, to obtain encoding information from the encoding message and determine the encoding information as slave control encoding of the first slave control board;
the first slave control board outputting a slave control board digital signal to the next slave control board via the IO line, and the master control board transmitting an encoding message to the next slave control board via the CAN bus;
the next slave control board receiving the encoding message when it is detected that the slave control board digital signal is at a high level, to obtain encoding information from the encoding message and determine the encoding information as slave control encoding of the next slave control board; and
returning to perform receiving of the encoding message when it is detected that the slave control board digital signal is at a high level, to obtain encoding information from the encoding message and determine the encoding information as slave control encoding of the next slave control board, until the digital signal of the IO line received by the master control board is at a high level, and obtain the slave control encoding of each of the slave control boards.

A person of ordinary skill in the art may understand that all or some of the steps in various methods of the foregoing embodiments may be implemented by program instructions, or may be implemented by a program instructing relevant hardware. The program instructions may be stored in a computer readable storage medium, and be loaded and executed by a processor.

Some embodiments of the present disclosure further provide a computer readable storage medium. The storage medium may include a Read Only Memory (ROM), a Random Access Memory (RAM), a magnetic disk, an optical disk, or the like. The storage medium stores a computer program that is loaded by a processor to perform the method for encoding the battery management system provided in any of the embodiments of the present disclosure. For example, the computer program may be loaded by the processor to perform the following steps:
performing addressing detection for each of the slave control boards to determine a detection result;
the master control board transmitting an encoding message to the first slave control board via the CAN bus to obtain a digital signal output from the IO line when the detection result indicates that the slave control board is not addressed;
the first slave control board receiving the encoding message if the digital signal is at a high level, to obtain encoding information from the encoding message and determine the encoding information as slave control encoding of the first slave control board;
the first slave control board outputting a slave control board digital signal to the next slave control board via the IO line, and the master control board transmitting encoding message to the next slave control board via the CAN bus;
the next slave control board receiving the encoding message when it is detected that the slave control board digital signal is at a high level, to obtain encoding information from the encoding message and determine the encoding information as slave control encoding of the next slave control board; and
returning to perform receiving of the encoding message when it is detected that the slave control board digital signal is at a high level, to obtain encoding information from the encoding message and determine the encoding information as slave control encoding of the next slave control board, until the digital signal of the IO line received by the master control board is at a high level, and obtain the slave control encoding of each of the slave control boards.

The inventors have found that the battery management system in the related art is encoded by a technician, and the battery management system has following problems: (1) when the number of the slave control boards of the BMS is larger, a time period for encoding the slave control boards is longer; and (2) it is necessary to count the number of slave control boards, which is prone to error.

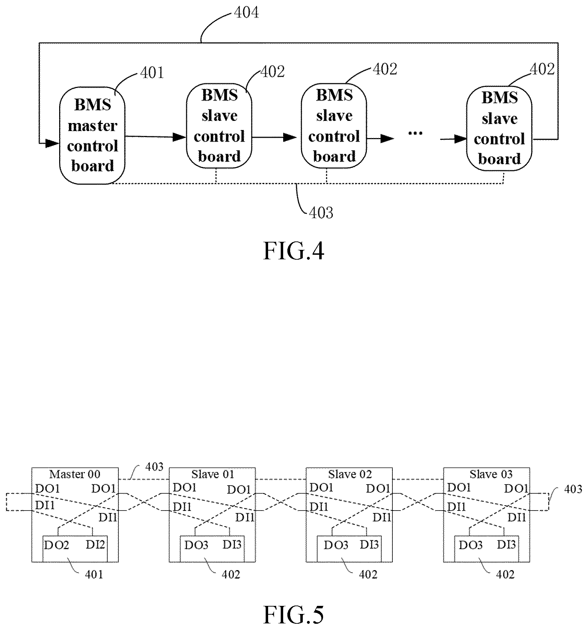

In order to solve the above problems, as shown in FIG. 4, some embodiments of the present disclosure provide a battery management system: including a BMS master control board 401 and a plurality of BMS slave control boards 402, where the plurality of BMS slave control boards 402 are arranged in sequence; and a hard wire encoding line 404 connected between the BMS master control board 401 and a first BMS slave control board 402 of the plurality of BMS slave control boards 402, between the BMS master control board 401 and a last BMS slave control board 402 of the plurality of BMS slave control boards 402, and between any two adjacent ones of the plurality of BMS slave control boards 402; where the BMS master control board 401 is configured to transmit an encoding message to corresponding one of the BMS slave control boards 402 at a rear end of the hard wire encoding line via the CAN bus 403 when a digital signal of the hard wire encoding line received by the BMS master control board 401 is at a high level, and the BMS slave control board 402 is configured to receive the encoding message transmitted by the BMS master control board 401.

The BMS master control board 401 is connected to all the BMS slave control boards 402 via the CAN bus 403 for communication between the BMS master control board 401 and all the BMS slave control boards 402.

The hard wire encoding line 404 is configured to transmit a digital signal between the BMS master control board 401 and the BMS slave control boards 402.

Specifically, the BMS master control board 401 is connected to the first BMS slave control board 402 via the hard wire encoding line 404, that is, a front end of the hard wire encoding line 404 is connected to the BMS master control board 401 and a rear end of the hard wire encoding line 404 is connected to the first BMS slave control board. Any two adjacent ones of the BMS slave control boards 402 are connected by the hard wire encoding line 404, that is, a front end of the hard wire encoding line 404 is connected to a previous BMS slave control board 401 and a rear end of the hard wire encoding line 404 is connected to a next BMS slave control board 402. The BMS master control board 401 is connected to the last BMS slave control board 402 via the hard wire encoding line 404, that is, a front end of the hard wire encoding line 404 is connected to the last BMS slave control board 402, and a rear end of the hard wire encoding line 404 is connected to the BMS master control board 401. As such, a closed-loop connection between the BMS master control board and the BMS slave control boards is realized. The BMS master control board is configured to transmit an encoding message to corresponding one of the BMS slave control boards at the rear end of the hard wire encoding line via the CAN bus when a digital signal of the hard wire encoding line received by the BMS master control board is at a high level. The BMS slave control board is configured to receive the encoding message transmitted by the BMS master control board, so that encoding of all the BMS slave control boards 402 is automatically completed after the BMS master control board 401 transmits the encoding message to the last BMS slave control board 402, thereby realizing automatic encoding of each of the BMS slave control boards 402 by the BMS master control board 401.

The battery management system provided in some embodiments of the present disclosure may include: a BMS master control board 401 and a plurality of BMS slave control boards 402, where the BMS master control board 401 is connected with the plurality of BMS slave control boards 402 via the CAN bus 403 for communication connection between the BMS master control board and the BMS slave control boards; and a hard wire encoding line 404 connected between the BMS master control board 401 and a first BMS slave control board 402 of the plurality of BMS slave control boards 402, between the BMS master control board 401 and a last BMS slave control board 402 of the plurality of BMS slave control boards 402, and between any two adjacent ones of the plurality of BMS slave control boards 402, for a closed-loop connection between the BMS master control board and the BMS slave control boards. The BMS master control board is configured to transmit an encoding message to corresponding one of the BMS slave control boards at a rear end of the hard wire encoding line via the CAN bus when a digital signal received by the hard wire encoding line is at a high level (that is, the digital signal is 1), so that encoding of all the BMS slave control boards is completed automatically without counting the number of the BMS slave control boards after the BMS master control board transmits the encoding message to the last BMS slave control board. When the BMS slave control board is replaced, encoding of all the BMS slave control boards is performed automatically, which improves board encoding efficiency of the BMS slave control boards, and realizes the intelligent encoding of all the BMS slave control boards through a mechanism of the hard wire encoding line.

In some embodiments, the BMS master control board includes a digital input interface and a digital output interface, and each of the BMS slave control boards includes a digital input interface and a digital output interface. The digital output interface of the BMS master control board is connected to the digital input interface of the first BMS slave control board via a hard wire encoding line. The digital output interface of the previous BMS slave control board is connected to the digital input interface of the next BMS slave control board via the hard wire encoding line. The digital output interface of the last BMS slave control board is connected to the digital input interface of the BMS master control board via a hard wire encoding line.

Specifically, as shown in FIG. 5, which is a schematic diagram of a connection relationship of a battery management system. The hard wire encoding line 404 includes a digital input interface DI1 and a digital output interface DO1, the BMS master control board 401 includes a digital input interface DI2 and a digital output interface DO2, each of the BMS slave control boards 402 includes a digital input interface DI3 and a digital output interface DO3, the digital output interface DI2 of the BMS master control board 401 is connected to the digital input interface DI3 of the first BMS slave control board 402 via the digital output interface DO2 of the hard wire encoding line 404, the digital output interface DO3 of the previous BMS slave control board 402 is connected to the digital input interface DI3 of the next BMS slave control board 402 via the digital output interface DO1 of the hard wire encoding line 404, and the digital output interface DO3 of the last BMS slave control board 402 is connected to the digital input interface DI2 of the BMS master control board 401 via the digital output interface DO1 of the hard wire encoding line 404. That is, the BMS master control board 401 is connected to the digital input interface DI3 of the BMS slave control board 402 via the hard wire encoding line 404, the digital output interface DO3 of the first BMS slave control board 402 is connected to the digital input interface DI3 of the second BMS slave control board 402 via the digital output interface DO1 of the hard wire encoding line 404, the digital output interface DO3 of the second BMS slave control board 402 is connected to the digital input interface DI3 of the third BMS slave control board 402 via the digital output interface DO1 of the hard wire encoding line 404, and so on. The digital output interface DO3 of the last BMS slave control board 402 is connected to the digital input interface DI2 of the BMS master control board 401 via the digital output interface DO1 of the hard wire encoding line 404. The closed-loop connection between the BMS master control board and the BMS slave control boards is realized through the hard wire encoding line and the CAN bus. When the digital signal of the hard wire encoding line received by the BMS master control board is at a high level, the encoding message is transmitted to corresponding one of the BMS slave control boards at the rear end of the hard wire encoding line via the CAN bus, so that the BMS slave control board at the rear end of the hard wire encoding line is encoded. As such, it is not necessary to count the number of the BMS slave control boards, and the intelligent encoding of all the BMS slave control boards is realized only through the digital input interface and the digital output interface of the hard wire encoding line, based on the digital input signal and the digital output signal and the message signal of the CAN bus.

In one example, a process for encoding each of the BMS slave control boards by the BMS master control board is as follows: after the BMS master control board starts the process, the BMS master control board first outputs a high level to the first BMS slave control board via the hard wire encoding line and transmits an encoding message to the first BMS slave control board via the CAN bus; when the digital signal of the hard wire encoding line received by the first BMS slave control board is at a high level, the first BMS slave control board receives the encoding message, and completes the encoding of the first BMS slave control board; after the encoding of the first BMS slave control board ends, the first BMS slave control board outputs a high level to the second BMS slave control board via the hard wire encoding line, and the BMS master control board transmits the encoding message to the second BMS slave control board via the CAN bus; when the digital signal of the hard wire encoding line received by the second BMS slave control board is at a high level, the second BMS slave control board receives the encoding message, and completes the encoding of the second BMS slave control board, and so on, until the encoding of the last BMS slave control board is completed; after the encoding of the last BMS slave control board is completed, the last BMS slave control board outputs a high level to the BMS master control board via the hard wire encoding line; and when the digital signal of the hard wire encoding line received by the BMS master control board is at a high level, the process ends, thereby automatically completing automatic encoding of all the BMS slave control boards.

In some embodiments, the BMS master control board is further configured to record the number of encoding messages and stop an encoding operation when the digital signal received from the digital input interface of the BMS master control board is at a high level.

Specifically, when the digital signal received from the digital input interface of the BMS master control board is at a high level, it indicates that encoding of all the BMS slave control boards has been completed. In this case, the number of encoding messages, that is, the number of BMS slave control boards, is recorded. At the same time, the BMS master control board stops the encoding operation, so that the process for encoding the BMS slave control boards can be stopped, thereby realizing the intelligent encoding of all the BMS slave control boards.

In some embodiments, each of the BMS slave control boards is configured to receive an encoding messages transmitted by the BMS master control board.

Specifically, the BMS slave control board can automatically encode itself by receiving the encoding message transmitted by the BMS master control board, thereby improving the encoding efficiency of the BMS slave control board.

In some embodiments, the BMS master control board is further configured to differentiate the BMS slave control boards based on encoding messages received by the BMS slave control boards.

Specifically, each of the BMS slave control boards can complete encoding of the BMS slave control board after receiving the encoding message, so that the BMS slave control boards can be distinguished from each other.

In some embodiments, the BMS master control board is further configured to transmit, when a BMS slave control board is replaced, an encoding message to the replaced BMS slave control board via the CAN bus.

Specifically, for the replaced BMS slave control board, the BMS master control board may transmit an encoding message to the replaced BMS slave control board via the CAN bus, thereby realizing automatic encoding of the replaced BMS slave control board.

In some embodiments, the BMS slave control panel is configured to collect a voltage and/or a temperature of a battery cell.

Specifically, the BMS slave control board is configured to collect a voltage and/or a temperature of a battery cell integrated on the BMS slave control board, and transmit the collected voltage and temperature of the battery cell to the BMS master control board.

In some embodiments, the BMS master control board is further configured to perform fault monitoring of one or more battery cells in each of the BMS slave control boards.

Specifically, the BMS master control board is further configured to perform fault monitoring according to the received voltage and/or temperature of the battery cells in the BMS slave control board, thereby improving the safety and reliability of the BMS.

Some embodiments of the present disclosure further provide a vehicle: including any of the battery management systems described above. The battery management system includes: a BMS master control board 401 and a plurality of BMS slave control boards 402, where the BMS master control board 401 is connected with the plurality of BMS slave control boards 402 via the CAN bus 403 for communication connection between the BMS master control board and the BMS slave control boards; and a hard wire encoding line 404 connected between the BMS master control board 401 and the first BMS slave control board 402, between any two adjacent ones of the plurality of BMS slave control boards 402, and between the BMS master control board 401 and the last BMS slave control board 402, for a closed-loop connection between the BMS master control board and the BMS slave control boards. The BMS master control board 401 is configured to transmit an encoding message to corresponding one of the BMS slave control boards at a rear end of the hard wire encoding line via the CAN bus when a digital signal of the hard wire encoding line received by the BMS master control board is at a high level, so that encoding of all the BMS slave control boards is completed automatically without counting the number of the BMS slave control boards after the BMS master control board transmits the encoding message to the last BMS slave control board. When the BMS slave control board is replaced, encoding of all the BMS slave control boards is performed automatically, which improves board encoding efficiency of the BMS slave control boards, and realizes the intelligent encoding of all the BMS slave control boards through a mechanism of the hard wire encoding line and further improves the management efficiency of the battery management system.

## Claims

1. A method for encoding a battery management system, wherein the battery management system comprises a master control board (101) and a plurality of slave control boards (102), the master control board (101) is connected with each of the slave control boards (102) by a Controller Area Network (CAN) bus (103), the plurality of slave control boards (102) are arranged in sequence, and the master control board (101) is connected to a first slave control board (102) and a last slave control board (102) of the plurality of slave control boards (102) via an Input Output (IO) line (104), a previous slave control board (102) and a next slave control board (102) of the plurality of slave control boards (102) are connected via the IO line (104), and a plurality of pieces of pre-configured encoding information are stored in the battery management system, and the method comprises:
performing (S101) addressing detection for each of the plurality of slave control boards (102) to determine a detection result;
the master control board (101) transmitting (S102), in responsive to the detection result indicating that the slave control board (102) is not addressed, an encoding message to the first slave control board (102) via the CAN bus (103) to obtain a digital signal output from the IO line (104);
the first slave control board (102) receiving (S103) the encoding message in responsive to the digital signal being at a high level, to obtain encoding information from the encoding message and determine the encoding information as slave control encoding of the first slave control board (102);
the first slave control board (102) outputting (S104) a slave control board digital signal to a next slave control board (102) via the IO line (104), and the master control board (101) transmitting an encoding message to the next slave control board (102) via the CAN bus (103);
the next slave control board (102) receiving (S105) the encoding message in responsive to the slave control board digital signal being at a high level, to obtain encoding information from the encoding message and determine the encoding information as slave control encoding of the next slave control board (102); and
returning (S106) to perform receiving an encoding message by a next slave control in responsive to the slave control board digital signal being at a high level, to obtain encoding information from the encoding message and determine the encoding information as slave control encoding of the next slave control board (102), until the digital signal of the IO line (104) received by the master control board (101) is at a high level, and obtain the slave control encoding of each of the slave control boards (102).

2. The method of claim 1, wherein the performing (S101) of addressing detection for each of the plurality of slave control boards (102) comprises:
configuring a slave control message corresponding to each of the slave control boards (102) based on an internal parameter of the slave control board (102);
obtaining a first check value by performing Cyclic Redundancy Check (CRC) check for the slave control message;
obtaining a second check value by obtaining a master control message received by the master control board (101) to perform CRC check for the master control message; and
comparing the first check value with the second check value to determine the detection result.

3. The method of claim 2, wherein the comparing of the first check value with the second check value comprises:
determining that the detection result indicates that the slave control board (102) has been addressed in responsive to the first check value being consistent with the second check value; and
determining that the detection result indicates that the slave control board (102) is not addressed in responsive to the first check value being inconsistent with the second check value.

4. The method of claim 2, further comprising: before configuring the slave control message corresponding to each of the slave control boards (102) based on the internal parameter of the slave control board (102),
writing a configuration parameter into each of the slave control boards (102); and
determining encoding information corresponding to the slave control board (102) based on the configuration parameter.

5. The method of claim 2, further comprising: before configuring the slave control message corresponding to each of the slave control boards (102) based on the internal parameter of the slave control board (102),
transmitting a check message to the slave control board (102) in a broadcast manner according to a preset period.

6. The method of claim 5, further comprising: after the master control board (101) transmitting (S102) the encoding message to the first slave control board (102) via the CAN bus (103),
stopping transmitting the check message, and setting the digital signal of the IO line (104) of the master control board (101) to a high level.

7. The method of any one of claims 1-6, further comprising: after the obtaining of the slave control encoding of each of the slave control boards (102),
setting a digital signal of the IO line (104) of the slave control board (102) to a low level, and transmitting a normal communication message in a broadcast form.

8. The method of any one of claims 1-6, further comprising:
reminding that the slave control board (102) is faulty in responsive to no encoding message being received from the slave control board (102) within a preset time.

9. An electronic device, comprising:
one or more processors (301);
a memory (302); and
one or more application programs, wherein the one or more application programs are stored in the memory (302) and configured to be executed by the processors (301) to implement the method of any one of claims 1-8.

10. A computer readable storage medium having stored thereon a computer program that is loaded by a processor (301) to perform the method of any one of claims 1-8.

## Patentansprüche

1. Verfahren zur Codierung eines Batteriemanagementsystems, wobei das Batteriemanagementsystem eine Master-Steuerplatine (101) und mehrere Slave-Steuerplatinen (102) umfasst, die Master-Steuerplatine (101) ist über einen CAN-Bus (Controller Area Network) (103) mit jeder der Slave-Steuerplatinen (102) verbunden, die Slave-Steuerplatinen (102) sind sequenziell angeordnet, die Master-Steuerplatine (101) ist ü ber eine E/A-Leitung (104) mit der ersten und der letzten Slave-Steuerplatine (102) verbunden, die jeweils vorherige und die nächste Slave-Steuerplatine (102) sind ebenfalls ü ber die E/A-Leitung (104) verbunden, im Batteriemanagementsystem sind mehrere vorkonfigurierte Codierungsinformationen gespeichert, das Verfahren umfasst: die Adresserkennung (S101) für jede der Slave-Steuerplatinen, Steuerplatinen (102) ermitteln ein Erkennungsergebnis;
die Master-Steuerplatine (101) sendet (S102) als Reaktion auf das Erkennungsergebnis, dass die Slave-Steuerplatine (102) nicht adressiert ist, eine Codierungsnachricht über den CAN-Bus (103) an die erste Slave-Steuerplatine (102), um ein digitales Signal von der IO-Leitung (104) zu erhalten;
die erste Slave-Steuerplatine (102) empfängt (S103) die Codierungsnachricht als Reaktion auf das High-Pegel des digitalen Signals, um Codierungsinformationen aus der Codierungsnachricht zu extrahieren und diese als Slave-Steuercodierung der ersten Slave-Steuerplatine (102) zu bestimmen;
Die erste Slave-Steuerplatine (102) gibt über die IO-Leitung (104) ein digitales Signal (S104) an die nächste Slave-Steuerplatine (102) aus, und die Master-Steuerplatine (101) sendet ü ber den CAN-Bus (103) eine Codierungsnachricht an die nächste Slave-Steuerplatine (102); Die nächste Slave-Steuerplatine (102) empfängt (S105) die Codierungsnachricht, sobald das digitale Signal der Slave-Steuerplatine auf hohem Pegel ist, um die Codierungsinformationen aus der Codierungsnachricht zu extrahieren und diese als Slave-Steuercodierung für die nächste Slave-Steuerplatine (102) zu verwenden; und
zurückkehren (S106), um eine Codierungsnachricht von einem nächsten Slave-Steuergerät zu empfangen, sobald das digitale Signal des Slave-Steuergeräts auf hohem Pegel liegt, um Codierungsinformationen aus der Codierungsnachricht zu gewinnen und diese als Slave-Steuercodierung des nächsten Slave-Steuergeräts (102) zu bestimmen, bis das digitale Signal der E/A-Leitung (104), das vom Master-Steuergerät (101) empfangen wird, auf hohem Pegel liegt, und um die Slave-Steuercodierung jedes der Slave-Steuergeräte (102) zu erhalten.

2. Verfahren nach Anspruch 1, wobei die Durchführung (S101) der Adressierungserkennung für jedes der mehreren Slave-Steuergeräte (102) Folgendes umfasst:
Konfigurieren einer Slave-Steuernachricht, die jedem der Slave-Steuergeräte (102) entspricht, basierend auf einem internen Parameter des Slave-Steuergeräts (102);
Ermitteln eines ersten Prüfwertes durch Durchführung einer zyklischen Redundanzprüfung (CRC) für die Slave-Steuernachricht; Ermitteln eines zweiten Prüfwerts durch Abrufen einer Master-Steuernachricht, die von der Master-Steuerplatine (101) empfangen wurde, und Durchführen einer CRC-Prüfung dieser Master-Steuernachricht; und
Vergleichen des ersten Pr ü fwerts mit dem zweiten Pr ü fwert zur Bestimmung des Erkennungsergebnisses.

3. Verfahren nach Anspruch 2, wobei der Vergleich des ersten Prüfwerts mit dem zweiten Pr üfwert Folgendes umfasst:
Feststellen, dass das Erkennungsergebnis anzeigt, dass die Slave-Steuerplatine (102) adressiert wurde, wenn der erste Prüfwert mit dem zweiten Prüfwert übereinstimmt; und
Feststellen, dass das Erkennungsergebnis anzeigt, dass die Slave-Steuerplatine (102) nicht adressiert wurde, wenn der erste Prüfwert mit dem zweiten Prüfwert nicht übereinstimmt.

4. Verfahren nach Anspruch 2, ferner umfassend: vor dem Konfigurieren der Slave-Steuernachricht, die jeder der Slave-Steuerplatinen (102) auf der Grundlage des internen Parameters der Slave-Steuerplatine (102) zugeordnet ist,
Schreiben eines Konfigurationsparameters in jede der Slave-Steuerplatinen (102); und
Bestimmen der Codierungsinformationen, die der Slave-Steuerplatine (102) zugeordnet sind, basierend auf dem Konfigurationsparameter.

5. Das Verfahren nach Anspruch 2, ferner umfassend: vor der Konfiguration der Slave-Steuernachricht, die jeder Slave-Steuerplatine (102) zugeordnet ist, basierend auf dem internen Parameter der Slave-Steuerplatine (102),
übertragen einer Prüfnachricht an die Slave-Steuerplatine (102) im Broadcast-Verfahren gemäß einem voreingestellten Zeitraum.

6. Das Verfahren nach Anspruch 5, ferner umfassend: nachdem die Master-Steuerplatine (101) die Codierungsnachricht (S102) über den CAN-Bus (103) an die erste Slave-Steuerplatine (102) übertragen hat,
Beenden der Übertragung der Prüfnachricht und Setzen des digitalen Signals der IO-Leitung (104) der Master-Steuerplatine (101) auf High-Pegel.

7. Verfahren nach einem der Ansprüche 1 bis 6, ferner umfassend: nach dem Abrufen der Slave-Steuerungscodierung jeder Slave-Steuerplatine (102),
das Setzen eines digitalen Signals der E/A-Leitung (104) der Slave-Steuerplatine (102) auf einen niedrigen Pegel und das Senden einer normalen Kommunikationsnachricht im Broadcast-Format.

8. Verfahren nach einem der Ansprüche 1 bis 6, ferner umfassend:
das Melden eines Fehlers an die Slave-Steuerplatine (102), wenn innerhalb einer voreingestellten Zeit keine Codierungsnachricht von der Slave-Steuerplatine (102) empfangen wird.

9. Elektronische Vorrichtung, umfassend:
einen oder mehrere Prozessoren (301);
einen Speicher (302); und
ein oder mehrere Anwendungsprogramme, wobei die Anwendungsprogramme im Speicher (302) gespeichert und so konfiguriert sind, dass sie von den Prozessoren (301) ausgeführt werden, um das Verfahren nach einem der Ansprüche 1 bis 8 zu implementieren.

10. Ein computerlesbares Speichermedium, auf dem ein Computerprogramm gespeichert ist, das von einem Prozessor (301) geladen wird, um das Verfahren eines der Ansprüche 1-8 durchzuführen.

## Revendications

1. Procédé d'encodage d'un système de gestion de batterie, comprenant une carte de commande principale (101) et plusieurs cartes de commande esclaves (102), La carte de commande principale (101) est connectée à chaque carte de commande esclave (102) par un bus CAN (103), Les cartes de commande esclaves (102) sont disposées en sequence, La carte de commande principale (101) est connectée à la première et à la dernière carte de commande esclave (102) par une ligne d'entrée/sortie (104), Les cartes de commande esclaves précédentes et suivantes (102) sont également connectées par la ligne d'entré e/sortie (104), Plusieurs informations d'encodage préconfigurées sont stockées dans le systè me de gestion de batterie, Le procédé comprend les étapes suivantes :
Détection d'adresse (S101) pour chaque carte de commande esclave (102) Déterminer un ré sultat de détection ;
La carte de commande principale (101) transmet (S102), en réponse au résultat de détection indiquant que la carte de commande esclave (102) n'est pas adressée, un message de codage à la première carte de commande esclave (102) via le bus CAN (103) afin d'obtenir un signal numérique de sortie sur la ligne d'E/S (104) ;
La première carte de commande esclave (102) reçoit (S103) le message de codage, en ré ponse au passage du signal numérique à un niveau haut, afin d'en extraire les informations de codage et de les déterminer comme codage de commande esclave ;
La premi è re carte de commande esclave (102) émet (S104) un signal numérique de commande esclave vers une autre carte de commande esclave (102) via la ligne d'E/S (104), et la carte de commande principale (101) transmet un message de codage à cette autre carte de commande esclave (102) via le bus CAN (103), La carte de contrôle esclave suivante (102) reçoit (S105) le message d'encodage en réponse au passage de son signal numérique à l'état haut, afin d'en extraire les informations d'encodage et de les déterminer comme é tant l'encodage de contrôle esclave de la carte esclave suivante (102) ;
puis retourne (S106) pour recevoir un message d'encodage d'une autre carte de contrôle esclave en réponse au passage de son signal numérique à l'état haut, afin d'en extraire les informations d'encodage et de les déterminer comme étant l'encodage de contrôle esclave de la carte esclave suivante (102), et ce jusqu'à ce que le signal numérique de la ligne d'E/S (104) reçu par la carte de contrôle maître (101) soit à l'état haut, et ainsi obtenir l'encodage de contrôle esclave de chaque carte de contrôle esclave (102).

2. Procédé selon la revendication 1, dans lequel l'exécution (S101) de la détection d'adressage pour chacune des cartes de commande esclaves (102) comprend :
la configuration d'un message de commande esclave correspondant à chaque carte de commande esclave (102) en fonction d'un paramètre interne de la carte de commande esclave (102) ;
l'obtention d'une première valeur de contrôle par vérification de redondance cyclique (CRC) du message de commande esclave ;
l'obtention d'une seconde valeur de contrôle par vérification CRC d'un message de commande maître reçu par la carte de commande maître (101) ; et
la comparaison de la première et de la seconde valeur de contrôle pour déterminer le résultat de la détection.

3. Procédé selon la revendication 2, dans lequel la comparaison de la première et de la seconde valeur de contrôle comprend :
la détermination que le résultat de la détection indique que la carte de commande esclave (102) a été adressée, la première et la seconde valeur de contrôle étant cohérentes. et
déterminer que le résultat de la détection indique que la carte de commande esclave (102) n'est pas adressée en réponse à l'incohérence entre la première et la seconde valeur de contrôle.

4. Procédé selon la revendication 2, comprenant en outre : avant de configurer le message de commande esclave correspondant à chaque carte de commande esclave (102) en fonction du paramètre interne de la carte de commande esclave (102), écrire un paramètre de configuration dans chaque carte de commande esclave (102) ; et
déterminer les informations d'encodage correspondant à la carte de commande esclave (102) en fonction du paramètre de configuration.

5. Procédé selon la revendication 2, comprenant en outre : avant de configurer le message de commande esclave correspondant à chaque carte de commande esclave (102) en fonction du paramètre interne de la carte de commande esclave (102),
transmettre un message de contrôle à la carte de commande esclave (102) par diffusion selon une période prédéfinie.

6. Le procédé selon la revendication 5, comprenant en outre : après la transmission par la carte de commande principale (101) (S102) du message d'encodage à la première carte de commande esclave (102) via le bus CAN (103),
l'arrêt de la transmission du message de contrôle et la mise à niveau du signal numérique de la ligne d'E/S (104) de la carte de commande principale (101).

7. Procédé selon l'une quelconque des revendications 1 à 6, comprenant en outre : après l'obtention du codage de commande esclave de chacune des cartes de commande esclave (102),
la mise à l'état bas d'un signal numérique de la ligne d'E/S (104) de la carte de commande esclave (102) et la transmission d'un message de communication normal sous forme de diffusion.

8. Procédé selon l'une quelconque des revendications 1 à 6, comprenant en outre :
un rappel indiquant que la carte de commande esclave (102) est défectueuse en cas d'absence de message de codage reçu de la carte de commande esclave (102) dans un délai prédéfini.

9. Dispositif électronique comprenant :
un ou plusieurs processeurs (301) ;
une mémoire (302) ; et
un ou plusieurs programmes d'application, ces programmes d'application étant stockés dans la mémoire (302) et configurés pour être exécutés par les processeurs (301) afin de mettre en œuvre le procédé selon l'une quelconque des revendications 1 à 8.

10. Un support de stockage lisible par ordinateur sur lequel est stocké un programme informatique qui est chargé par un processeur (301) pour exécuter la méthode de l'une quelconque des revendications 1 à 8.
